# EUROPEAN PATENT SPECIFICATION

(11) **EP 2 597 376 B1**
(45) Date of publication and mention of the grant of the patent: **09.01.2019**
(21) Application number: 12192798.2
(22) Date of filing: 15.11.2012
(51) Int. Cl.: F24C 3/12, F16K 35/02, F16K 5/02, F23N 1/00

(54) **A cooking device having a gas tap shaft**
Kochvorrichtung mit Gashahnschaft
Dispositif de cuisson ayant un arbre de prise de gaz

(30) Priority: 26.11.2011 TR 201112983
(43) Date of publication of application: 29.05.2013
(73) Proprietor: BSH Hausgeräte GmbH, 81739 München (DE)
(72) Inventor: Atay, Erdinc, 39750 Kirklareli (TR); Mert, Mustafa, 59501 Çerkezköy (TR); Uygun, Ramazan, 59850 Tekirdag (TR)

(56) References cited:
- EP-A1- 0 486 796
- EP-A2- 2 436 981

## Description

### TECHNICAL FIELD

The present invention relates to a cooking device which has a shaft controlling the gas flow in a gas tap providing adjustable gas flow to the burner.

### KNOWN STATE OF THE ART

In cooking devices, there are gas taps which control if gas flow can be provided to the burner and which control gas flow rate. The gas input of the burner in the gas tap is closed by a wedge. The wedge is controlled by means of a rod whereto it is connected and by means of a shaft which is connected to the rod from another end thereof where the wedge is not connected. The shaft is connected to a control button from the other end which is not connected to the rod. As the user pushes and turns the control button, the shaft moves the rod and the rod moves the wedge. Thus, the gas channel, which is closed by the wedge, is opened or closed. The shaft realizes forward-backward movement and axial rotation movement in the axial direction. During the movement of the shaft, in order to prevent the abrasion of the end thereof which is connected to the rod and in order to prevent the deterioration of the axial movements because of abrasion, a plate is positioned between the shaft and the rod. Said invention is defined in the Turkish patent application TR2010/07959.

### BRIEF DESCRIPTION OF THE INVENTION

The object of the present invention is to provide a cooking device where the operational accuracy of the gas taps with a rod and shaft comprising separate pieces is preserved.

Another object of the present invention is to provide a cooking device where the rod and the shaft, which comprise separate pieces, can be assembled to each other in an easy manner.

In order to reach the abovementioned object, the subject matter cooking device has a gas tap comprising a shaft which is movable along an axial advancing direction, a rod which is connected to the shaft at one end and connected to a wedge that opens and closes a gas channel at an opposing second end. Said shaft comprises a housing at its end that shaft is connected to the rod where the rod partially enters thereof and a plate which is provided between the shaft and the rod and whose abrasion resistance is greater than the abrasion resistance of the shaft. Since the shaft comprises housing and since said plate and rod are positioned inside the housing, the assembly of the plate and of the rod to the shaft is facilitated.

The shaft is made of plastic material. In the preferred application of the subject matter invention, the plate is made of metal material. By means of this, the abrasion of the plastic shaft during operation is prevented. The shaft and the rod are concentric.

In an application of the subject matter invention, the plate is fixed to the shaft in a shrink-fit manner. In another application of the subject matter invention, the plate is adhered and thereby fixed to the shaft.

### BRIEF DESCRIPTION OF THE FIGURES

The additional characteristics and advantages of the present invention will be obtained from the exemplary embodiments giving reference to the accompanied figures.

In Figure 1, the cross sectional view of the gas tap in the subject matter cooking device is given.

In Figure 2, the view of Detail B illustrated in Figure 1 is given.

### REFERENCE NUMBERS

- 10: Gas channel
- 20: Tap
- 30: Shaft
- 32: Housing
- 34: Plate
- 40: Wedge
- 50: Rod
- 52: Spring

### THE DETAILED DESCRIPTION OF THE INVENTION

The subject matter cooking device comprises at least one burner; at least one gas channel (10) providing gas flow to the burner; a gas tap (20) which provides the control of the gas which will pass through the gas channel (10); and a control button which is connected to the gas tap (20).

The gas tap (20) is connected from one end to a control button which is used by the user for applying gas flow, for interrupting and adjusting gas flow, and the gas tap (20) moreover comprises a shaft (30) which transfers the movement of the control button; a rod (50) which is connected to the shaft (30) in a coaxial manner from the other end of the shaft (30) which is not connected to the control button; and a wedge (40) which is connected to the rod (50) from the other end thereof which is not connected to the shaft (30) and which activates and deactivates the gas channel (10) in connection to the shaft (30) and rod (50) movement.

The shaft (30) comprises a housing (32) which is formed at the other end thereof whereto the control button is not connected and a plate (34) which is positioned inside the housing (32).

In a preferred application of the subject matter invention, there is at least one spring (52) which is adapted to the rod (50) so that the rod (50) applies pressure to the shaft (30). The spring (52) provides the rod (50) to push the shaft (30), and after the shaft (30) is pushed by the user, the spring helps the shaft (30) to return to the initial position thereof.

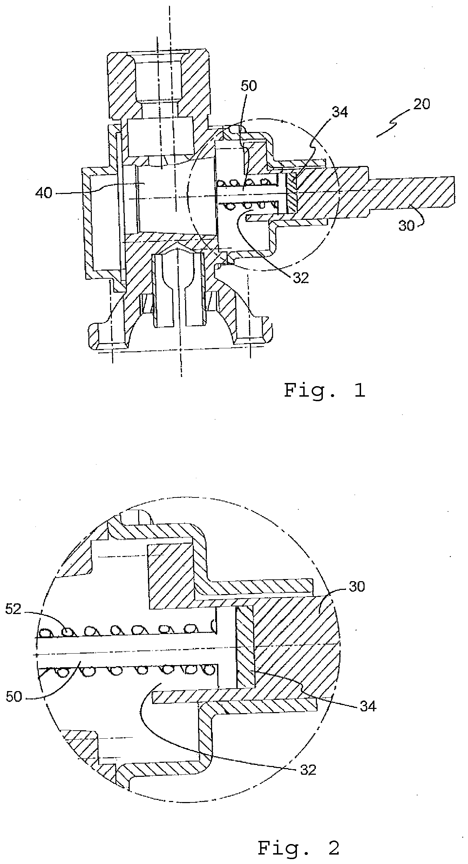

In Figure 1, the cross section of the gas tap (20) is illustrated where the shaft (30) and the rod (50), which comprise separate pieces, are assembled to each other. The plate (34) is covered like a lid to the inner press surface of the shaft (30) inside the housing (32) and between the shaft (30) and the rod (50). After the plate (34) is positioned inside the housing (32) so as to be rested to the inner press surface of the shaft (30), one end of the rod (50) is disposed inside the housing (32) from the other side of the plate (34) so that said rod (50) end will cover the edge of the plate (34) facing the rod (50). At the end of the rod (50) facing the plate (34), there is a widened edge which covers the plate (34).

The plate (34) is embedded into the housing (32) so as to be rested to the shaft (30) from one side and so as to be rested to the rod (50) from the other side. The rod (50) enters into the housing (32) up to a certain point thereof.

By means of the subject matter invention, an additional material or structure is not needed for fixing the plate (34) to the shaft (30) and thereby the assembly is facilitated.

## Claims

1. A cooking device with a gas tap comprising a shaft (30) which is made of a plastic material and movable along an axial direction, a rod (50) at one first end fixed to the shaft (30) and at the opposite second end secured to a wedge (40) that selectively opens and closes a gas channel (10) at an opposing second end, **characterized in that** the shaft (30) comprises a housing (32) at the first end fixed to the shaft (30) wherein the rod (50) at least partially received and a plate (34) which is fixed to the shaft (30), is provided between the shaft (30) and the rod (50) whose abrasion resistance is greater than the shaft (30).

2. A cooking device according to Claim 1, wherein the plate (34) is made of metal material.

3. A cooking device according to Claim 2, wherein the shaft (30) and the rod (50) are coaxial.

4. A cooking device according to any one of the preceding claims, wherein the plate (34) is fixed to the shaft (30) in a shrink-fit manner.

5. A cooking device according to any one of the claims between Claim 1 and 3, wherein the plate (34) and the shaft (30) are adherent to each other.

## Patentansprüche

1. Kochvorrichtung mit einem Gashahn, der eine Welle (30) umfasst, die aus einem Kunststoffmaterial hergestellt und in einer axialen Richtung beweglich ist, wobei eine Stange (50) an einem ersten Ende an der Welle (30) fixiert und an dem gegenüberliegenden, zweiten Ende an einem Keil (40) befestigt ist, der eine Gasleitung (10) an einem gegenüberliegenden, zweiten Ende gezielt öffnet und verschließt, **dadurch gekennzeichnet, dass** die Welle (30) an dem an der Welle (30) fixierten, ersten Ende ein Gehäuse (32) umfasst, wobei die Stange (50) zumindest teilweise aufgenommen und zwischen der Welle (30) und der Stange (50) eine an der Welle (30) fixierte Platte (34) vorgesehen ist, deren Verschleißfestigkeit höher ist als bei der Welle (30).

2. Kochvorrichtung nach Anspruch 1, wobei die Platte (34) aus Metallmaterial hergestellt ist.

3. Kochvorrichtung nach Anspruch 2, wobei die Welle (30) und die Stange (50) koaxial sind.

4. Kochvorrichtung nach einem der vorhergehenden Ansprüche, wobei die Platte (34) durch Aufschrumpfen an der Welle (30) fixiert ist.

5. Kochvorrichtung nach einem der Ansprüche 1 bis 3, wobei die Platte (34) und die Welle (30) aneinander anhaften.

## Revendications

1. Dispositif de cuisson avec un robinet de gaz comprenant un arbre (30) fabriqué en un matériau plastique et déplaçable dans un sens axial, une tige (50) fixée à l'arbre (30) en une première extrémité et, en la deuxième extrémité opposée, sécurisée à une cale (40) qui ouvre et ferme de façon sélective un conduit de gaz (10) en une deuxième extrémité opposée, **caractérisé en ce que** l'arbre (30) comprend un logement (32) fixé à l'arbre (30) en la première extrémité, dans lequel la tige (50) se loge au moins partiellement et une plaque (34) fixée à l'arbre (30) et dont la résistance à l'abrasion est supérieure à celle de l'arbre (30) est prévue entre l'arbre (30) et la tige (50).

2. Dispositif de cuisson selon la revendication 1, dans lequel la plaque (34) est fabriquée en un matériau métallique.

3. Dispositif de cuisson selon la revendication 2, dans lequel l'arbre (30) et la tige (50) sont coaxiaux.

4. Dispositif de cuisson selon l'une quelconque des revendications précédentes, dans lequel la plaque (34) est fixée à l'arbre (30) en ayant recours à un ajustage par contraction.

5. Dispositif de cuisson selon l'une quelconque des revendications précédentes 1 à 3, dans lequel la plaque (34) et l'arbre (30) adhèrent l'un à l'autre.
